# EUROPÄISCHE PATENTANMELDUNG

(11) **EP 0 894 944 A1**
(43) Veröffentlichungstag der Anmeldung: **03.02.1999**
(21) Anmeldenummer: 97113045.5
(22) Anmeldetag: 29.07.1997
(51) Int. Cl.: F01D 5/14, F01D 11/00

(54) **Turbinenbeschaufelung**

(71) Anmelder: SIEMENS AKTIENGESELLSCHAFT, 80333 München (DE)
(72) Erfinder: Bell, Ralf, 47647 Kerken (DE)

(57) **Zusammenfassung**

Die Erfindung betrifft eine Turbine mit einem Dichtspalt (9) zwischen einem Kopfbereich (4) einer Turbinenschaufel (2) und einer Turbinenkomponente (5). Dem Dichtspalt (9) ist stromab eine Begrenzungsfläche (10) nachgeschaltet, die um einen spitzen Winkel (α) gegenüber einer Rotationsachse (1) der Turbine geneigt ist und, zumindest bereichsweise, durch die Turbinenkomponente (5) gebildet ist. Die Turbinenkomponente (5) und/oder der Kopfbereich (4) weisen in dem Dichtspalt (9) zusätzlich oder alternativ eine Vertiefung zur Umlenkung einer Strömung eines Aktionsfluids (20) in dem Dichtspalt (9) um einen Umlenkwinkel (γ) in Umfangsrichtung auf.

## Beschreibung

Die Erfindung betrifft eine Turbine, insbesondere eine Dampfturbine, welche entlang einer Rotationsachse gerichtet ist, und eine erste Turbinenschaufel umfaßt. Die Turbinenschaufel ist entlang einer Schaufelachse gerichtet und weist einen Kopfbereich sowie einen daran angrenzenden Schaufelblattbereich auf. Weiterhin umfaßt die Dampfturbine eine sich entlang der Rotationsachse erstreckende Turbinenkomponente, einen Hauptströmungsweg mit einer Hauptströmungsrichtung und einen Spaltströmungsweg, der strömungstechnisch mit dem Hauptströmungsweg verbunden ist und durch einen Spalt zwischen Kopfbereich und Turbinenkomponente führt. Der Schaufelblattbereich ermöglicht die Umlenkung eines durch den Hauptströmungsweg führbaren Aktionsfluides um einen Umfangswinkel.

Die Erfindung betrifft weiterhin eine Turbinenschaufel, die entlang einer Schaufelachse gerichtet ist und einen Kopfbereich sowie einen daran angrenzenden Schaufelblattbereich aufweist, wobei der Schaufelblattbereich zur Umlenkung eines Aktionsfluides um einen Umfangswinkel ausgebildet ist.

In der EP 0 509 921 B1 ist eine Aktions-Dampfturbine mit einem Rotor und einem Stator sowie mehreren Stufen beschrieben. Die Stufen weisen je eine feste Beschaufelung und eine bewegliche Beschaufelung auf. Die feste Beschaufelung bewirkt mehr als 85% des Druckabfalls an der Basis jeder Stufe. Die bewegliche Beschaufelung ist unmittelbar auf dem Rotor montiert. Die feste Beschaufelung weist an einem inneren Kranz eine Bandage auf, deren Basisdurchmesser im wesentlichen dem Durchmesser des Rotors entspricht. Weiterhin ist eine Dichtung, die die Abdichtung der ortsfesten Beschaufelung gegenüber dem Rotor bewirkt, vorgesehen. Die EP 0 509 921 B1 gibt mehrere unterschiedliche Ausführungsformen für die Dichtung sowie die Strömungsführung von aus der Dichtung austretendem Fluid an. Gemäß einer Ausführungsform sind die Bandage abströmseitig sowie eine der Bandage nachfolgende Laufschaufel in einem Fußbereich abgeschrägt, so daß durch die Dichtung strömendes Fluid im wesentlichen axial in eine Hauptströmung des Fluides einströmt.

In dem Artikel "Loss mechanisms in Turbomachines" von J.D. Denton, in ASME Paper 93-GT-439, 1993, The American Society of Mechanical Engineers, sind verschiedene Verlustmechanismen, welche eine Verringerung des Wirkungsgrades einer Dampfturbine bewirken, beschrieben und eine quantitative und qualitative Abschätzung dieser Verluste angegeben. Ein wesentlicher Verlustanteil, der zu den strömungstechnischen Verlustursachen zählt, wird durch den sogenannten Spaltverlust hervorgerufen, welcher an dem Gesamtverlust bis zu ca. 30% betragen kann. Der Spaltverlust entsteht bei der Durchströmung einer Dichtungspartie zwischen einer feststehenden Komponente und einer rotierenden Komponente der Dampfturbine, wobei das durch die Dichtungspartie strömende Fluid anschließend in die Hauptströmung des Fluides wiedereintritt. Die Dichtungspartie dient hierbei der Abdichtung der rotierenden Komponente von der feststehenden Komponente, beispielsweise einer Laufschaufel gegenüber dem Turbinengehäuse und einer Leitschaufel gegenüber der Turbinenwelle. Die Größe des Spaltverlustes ist u.a. proportional zum Anteil des durch die Dichtung des Spaltes strömenden Massenstroms bezogen auf den Hauptmassenstrom, abhängig von dem Geschwindigkeitsverhältnis des Fluides in dem Spalt und in der Hauptströmung sowie von dem Winkel, mit dem das Fluid aus dem Spalt in die Hauptströmung eintritt. Letzteres führt aufgrund unterschiedlicher Temperatur und Geschwindigkeit zwischen Hauptströmung und Spaltströmung gemäß Denton zu einer Temperaturerhöhung und damit zu einem zusätzlichen Wirkungsgradverlust.

In dem Buch "Untersuchung und Berechnung axialer Turbinenstufen" von Dejc und Trojanovskij, VEB-Verlag, Berlin, 1973, Seiten 452 und 453 in Abschnitt 76.4.3 ist der Einfluß der Schaufelüberdeckung und des Deckbandes bei einer Dampfturbine beschrieben. Durch eine Verwendung von Deckbändern mit Dichtungsspitzen an den feststehenden Leitschaufeln wird eine Erhöhung des Wirkungsgrades erreicht. Es sind verschiedene Ausführungen von Deckbändern mit einem Dichtungssystem und deren Einfluß auf den Wirkungsgrad dargestellt.

Aufgabe der Erfindung ist es, eine Turbine anzugeben, bei der eine Verringerung des Spaltverlustes in einem Spalt zwischen einer Turbinenschaufel und einer Turbinenkomponente erreichbar ist. Eine weitere Aufgabe der Erfindung besteht darin, eine Turbinenschaufel für eine Verringerung des Spaltverlustes anzugeben.

Erfindungsgemäß wird die auf eine Turbine, insbesondere eine Dampfturbine, gerichtete Aufgabe durch eine Turbine gelöst, welche entlang einer Rotationsachse gerichtet ist und aufweist eine erste Turbinenschaufel, die entlang einer Schaufelachse gerichtet ist und einen Kopfbereich sowie einen daran angrenzenden Schaufelblattbereich hat. Weiterhin ist eine sich entlang der Rotationsachse erstreckende Turbinenkomponente vorgesehen, wobei ein Hauptströmungsweg mit einer Hauptströmungsrichtung und ein Spaltströmungsweg, der strömungstechnisch mit dem Hauptströmungsweg verbunden ist und durch einen Spalt zwischen Kopfbereich und Turbinenkomponente führt. Der Spaltströmungsweg weist in bezug auf die Hauptströmungsrichtung gesehen stromab des Spaltes eine Begrenzungsfläche auf, die im Mittel mit einem spitzen Winkel α gegenüber der Rotationsachse geneigt ist. Die Begrenzungsfläche ist zumindest bereichsweise durch die Turbinenkomponente gebildet. Eine Anwendung der Erfindung auf eine Gasturbine ist ebenfalls denkbar.

Vorzugsweise weist die Turbine eine sich entlang einer Schaufelachse erstreckende und stromab der ersten Turbinenschaufel angeordnete zweite Turbinenschaufel auf, die einen Schaufelblattbereich und einen Fußbereich besitzt, und mit dem Fußbereich in der Turbinenkomponente befestigt ist, wobei die Begrenzungsfläche zumindest bereichsweise den Fußbereich von dem Schaufelblattbereich abgrenzt und der Schaufelblattbereich der ersten Turbinenschaufel gegenüber dem an den Fußbereich der zweiten Turbinenschaufel angrenzenden Schaufelblattbereich einen radialen Höhenversatz aufweist.

Alternativ oder zusätzlich zur Begrenzungsfläche weist eine erfindungsgemäße Turbine einen Schaufelblattbereich der ersten Turbinenschaufel auf, der zur Umlenkung eines durch den Hauptströmungsweg führbaren Aktionsfluides um einen Umfangswinkel ausgebildet ist und die Turbinenkomponente und/oder die erste Turbinenschaufel eine den Spaltströmungsweg begrenzende Umfangsfläche aufweisen bzw. aufweist, und in der Umfangsfläche zumindest eine Vertiefung zur Strömungsumlenkung im wesentlichen ebenfalls um den Umfangswinkel γ vorgesehen ist.

Mit der erfindungsgemäßen Turbine ist der insbesondere als Spaltdichtung ausgebildete Spaltströmungsweg ausströmseitig durch eine geometrische und konstruktive Ausgestaltung der Turbinenschaufel, insbesondere einer Leit- oder Laufschaufel, und der Turbinenkomponente strömungstechnisch so ausgebildet, daß eine Verbesserung des Wiedereintritts des durch den Spaltströmungsweg strömenden Fluides in das entlang der Hauptströmungsrichtung strömende Aktionsfluid gewährleistet ist.

Der mittlere Reaktionsgrad einer Turbinenstufe der Turbine sowie der lokale, schaufelhöhenabhängige Reaktionsgrad im Bereich des als Spaltdichtung ausgebildeten Spaltströmungsweges ist im Rahmen der technischen Anforderungen einstellbar. Die Turbine kann hierbei axial, diagonal, radial oder auch gemischt augebildet sein. Als Turbinenschaufel können zylindrische oder auch beliebig dreidimensional gestaltete Turbinenschaufeln verwendet werden.

In vorteilhaften Ausführungsformen der Turbine gemäß den Unteransprüchen sind zur Verbesserung des Wiedereintritts des durch den Spaltströmungsweg strömenden Aktionsfluides in die Hauptströmung des Aktionsfluides unterschiedliche Ausgestaltungen des Kopfbereiches der ersten Turbinenschaufel, der Turbinenkomponente, der Turbinenwelle oder des Turbinengehäuses sowie des Fußbereiches der der ersten Turbinenschaufel nachgeschalteten zweiten Turbinenschaufel angegeben.

Die Winkeldifferenz, d.h. der spitze Winkel α zwischen dem in die meridionale Hauptströmung wieder eintretenden Spaltmassenstrom, liegt je nach technischer Anforderung vorzugsweise zwischen 0° und 90°, insbesondere unterhalb 45°. Vorzugsweise liegt der spitze Winkel α in einem Bereich zwischen 5° und 25°, insbesondere bei 10°. Die Begrenzungsfläche kann als ebene Fläche um den spitzen Winkel α geneigt sowie je nach Ausführung auch kontinuierlich, ggf. stetig gekrümmt verlaufen, wobei der Begrenzungsfläche im Mittel der spitze Winkel α zugeordnet ist.

In dem Spalt ist vorzugsweise ein Dichtungssystem mit axial voneinander beabstandeten Dichtungsspitzen vorgesehen. Die Dichtungsspitzen greifen vorzugsweise in eine entsprechende Dichtungsvertiefung des Kopfbereichs bzw. der Turbinenkomponente ein. Es sind nahezu beliebige Dichtungssysteme möglich, wie sie beispielsweise in dem Buch von Dejc sowie der EP 0 509 921 B1 beispielhaft beschrieben sind. Die Turbine kann sowohl in Trommelbauweise als auch in Kammerbauweise ausgeführt sein.

Die erste Leitschaufel bildet mit einer Mehrzahl erster Leitschaufeln zusammen einen zur Rotationsachse symmetrischen Leitschaufelkranz. Mit einem ebenfalls zur Rotationsachse symmetrischen axial nachgeschalteten Laufschaufelkranz bildet der Leitschaufelkranz eine jeweilige Turbinenstufe. Die Kopfbereiche der Turbinenschaufeln eines Turbinenschaufelkranzes bilden vorzugsweise ein Deckband. Das Deckband weist vorzugsweise zur Rotationsachse rotationssymmetrische axial einander nachgeschaltete Vertiefungen auf.

Die Hauptströmung des Aktionsfluides wird an dem Schaufelblattbereich vorbeigeführt und durch diesen um einen Umlenkwinkel γ umgelenkt. Es erfolgt hiermit eine lokale Strömungsrichtung der Hauptströmung mit einer Umfangskomponente. Vorzugsweise sind in dem Spalt an dem Kopfbereich und/oder an der Turbinenkomponente Vertiefungen mit einer Umfangskomponente vorgesehen, so daß eine Umlenkung des durch den Spaltströmungsweg strömenden Aktionsfluides im wesentlichen ebenfalls um den Umlenkwinkel erfolgt. Ein Einströmen des Spaltmassenstroms in den Hauptmassenstrom erfolgt daher im wesentlichen mit der gleichen Umfangskomponente, so daß hierdurch ein zusätzlicher Reibungsverlust vermieden wird. Mit der Richtungsanpassung des Spaltmassenstroms an die meridionale Hauptströmungsrichtung durch eine Einströmung mit dem spitzen Winkel α wird ein Wirkungsgradverlust durch das Einströmen in die Hauptströmung deutlich verringert.

Vorzugsweise ist der Kopfbereich abströmseitig abgeschrägt, ebenfalls im Mittel ebenfalls um den spitzen Winkel α der Begrenzungsfläche. Hierdurch ist eine zusätzliche Verbesserung der Einströmung des Spaltmassenstroms in die Hauptströmung des Aktionsfluids erreichbar.

Vorzugsweise ist die erste Turbinenschaufel eine Leitschaufel und die Turbinenkomponente eine Turbinenwelle oder die erste Turbinenschaufel eine Laufschaufel und die Turbinenkomponente ein Turbinengehäuse.

Es ist ebenfalls möglich, daß die erste Turbinenschaufel einen Fußbereich aufweist, der einströmseitig eine Begrenzungsfläche hin zu dem Schaufelblattbereich aufweist, die im Mittel um den spitzen Winkel α geneigt ist. Dies führt zu einer Verringerung des Einströmverlustes einer Spaltströmung, die zwischen einer der ersten Turbinenschaufel vorgeschalteten zweiten Turbinenschaufel und einer an die zweite Turbinenschaufel angrenzenden Turbinenkomponente hindurchströmt. Hierdurch können die Verluste durch ein Wiedereinströmen in die Hauptströmung alternierend aufeinander folgender Leitschaufelkränze und Laufschaufelkränze verringert werden.

Erfindungsgemäß wird die auf eine Turbinenschaufel gerichtete Aufgabe durch eine solche Turbinenschaufel gelöst, die entlang einer Schaufelachse gerichtet ist und einen Kopfbereich mit einem daran angrenzenden Schaufelblattbereich aufweist, wobei der Schaufelblattbereich zur Umlenkung eines Aktionsfluides um einen Umfangwinkel ausgebildet ist, und der Kopfbereich eine Umfangsfläche im wesentlichen senkrecht zur Schaufelachse aufweist, in welche Umfangsfläche zumindest eine Vertiefung zur Strömungsumlenkung im wesentlichen ebenfalls um den Umfangswinkel vorgesehen ist. Vorzugsweise ist die Turbinenschaufel in einem rotationssymmetrischen Schaufelkranz aus einer Mehrzahl im wesentlichen identischer Turbinenschaufeln eingesetzt, wobei die Kopfbereiche der Turbinenschaufeln ein Deckband bilden, in dem eine Mehrzahl von Vertiefungen eine Umlenkung eines entlang des Kopfbereiches strömenden Aktionsfluides um den Umfangswinkel gewährleisten. Die Vertiefung ist vorzugsweise im Mittel um einen spitzen Winkel gegenüber einer zur Schaufelachse senkrechten Rotationsachse geneigt.

Anhand der in der Zeichnung dargestellten Ausführungsbeispiele werden eine Dampfturbine mit Dichtungssystem sowie die Turbinenschaufel näher erläutert. Die Figuren zeigen schematisch und nicht maßstäblich die zur Erläuterung dargestellten Komponenten. Es zeigen:
- FIG 1: einen Ausschnitt durch einen Längsschnitt einer Aktions-Dampfturbine in Trommelbauweise,
- FIG 2: einen vergrößerten Ausschnitt gemäß Figur 1,
- FIG 3, 4 und 5: einen Ausschnitt analog zu Figur 2 einer jeweils alternativen Ausführungsform,
- FIG 6: einen abgerollt dargestellten Ausschnitt eines Deckbandes eines Leitschaufelkranzes und
- FIG 7: einen Ausschnitt eines Längsschnittes einer Leitschaufel mit Kopfbereich.

Die in den einzelnen Figuren verwendeten Bezugszeichen haben jeweils die gleiche Bedeutung.

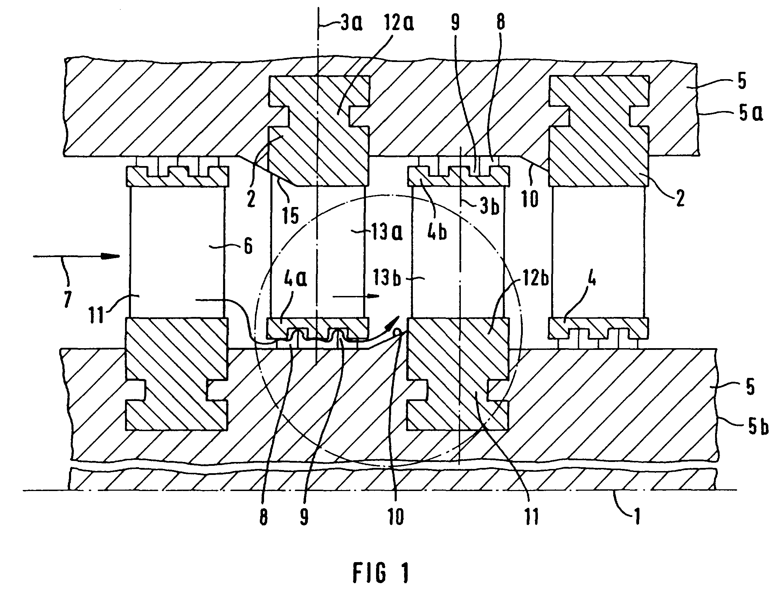

Figur 1 zeigt einen Ausschnitt eines Längsschnittes einer entlang einer Rotationsachse 1 gerichteten Aktionsdampfturbine (nicht näher dargestellt) in Trommelbauart. Die Dampfturbine weist eine entlang der Rotationsachse 1 gerichtete Turbinenkomponente 5, ein Turbinengehäuse 5a sowie eine weitere Turbinenkomponente 5, eine Turbinenwelle 5b auf. In dem Turbinengehäuse 5a sind axial voneinander beabstandete erste Turbinenschaufeln (Leitschaufeln) in einem jeweiligen zur Rotationsachse 1 rotationssymmetrischen Leitschaufelkranz angeordnet. Jede Leitschaufel 2 ist entlang einer Schaufelachse 3a gerichtet und weist entlang der Schaufelachse 3a einen Fußbereich 12a, einen sich daran anschließenden Schaufelblattbereich 13a und einen Kopfbereich 4 auf. Mit dem Fußbereich 12a ist die Leitschaufel 2 mit dem Gehäuse 5a befestigt. Zwischen je zwei axial voneinander beabstandeten Leitschaufeln 2 ist jeweils eine mit der Turbinenwelle 5b verbundene zweite Turbinenschaufel (Laufschaufel 11) angeordnet. Jede Laufschaufel 11 ist entlang einer Schaufelachse 3b von einem Fußbereich 12b über einen Schaufelblattbereich 13b gerichtet. Mit dem Fußbereich 12b ist jede Laufschaufel 11 mit der Turbinenwelle 5b verbunden. Ein Hauptströmungsweg 6, durch welchen Aktionsfluid 20 zum Antrieb der Laufschaufeln 11 durch die Dampfturbine führbar ist, verläuft durch die in Umfangsrichtung voneinander beabstandeten Schaufelblattbereiche 13a eines jeweiligen Leitschaufelkranzes der Leitschaufeln 2. Das Aktionsfluid 20 durchströmt den Hauptströmungsweg 6 entlang einer Hauptströmungsrichtung 7, die im wesentlichen parallel zur Rotationsachse 1 verläuft.

Zwischen dem Kopfbereich 4a der ersten Turbinenschaufel 2 (Leitschaufel 2) und der Turbinenwelle 5b sowie dem Kopfbereich 4b einer zweiten Turbinenschaufel 11, der Laufschaufel, und dem Turbinengehäuse 5a ist jeweils ein Ringspalt 9 gebildet. Dieser Ringspalt 9 ist Teil eines Spaltströmungswegs 8, durch den ein Teil des Aktionsfluides 20 strömt, ohne entweder Arbeit an den Laufschaufeln 11 zu verrichten bzw. ohne in den Leitschaufeln 2 über den Schaufelblattbereich 13a entsprechend um einen Umlenkwinkel γ umgelenkt zu werden. Dieses durch den Spaltströmungsweg 8 strömende Aktionsfluid 20, auch als Spaltmassenstrom bezeichnet, führt zu einem Wirkungsgradverlust der Dampfturbine. Zur Verringerung dieses Wirkungsgradverlustes ist in jedem Spalt 9 ein Dichtungssystem 17 vorgesehen, umfassend axial voneinander beabstandete Dichtspitzen 18 und in einem jeweiligen Kopfbereich 4a, 4b in Umfangsrichtung verlaufende Dichtvertiefungen 19. Einige der Dichtspitzen 18 erstrecken sich von der jeweiligen Turbinenkomponente 5 in eine jeweilige Dichtvertiefung 19 hinein. Stromab des jeweiligen Spaltes 9 strömt das Aktionsfluid 20 aus dem Strömungsweg 8 in den Hauptströmungsweg 6 hinein. Diese Einströmung erfolgt im wesentlichen mit einer Strömungsrichtung, die gegenüber der Hauptströmungsrichtung 7 sowie gegenüber der Rotationsachse 1 um einen spitzen Winkel α geneigt ist.

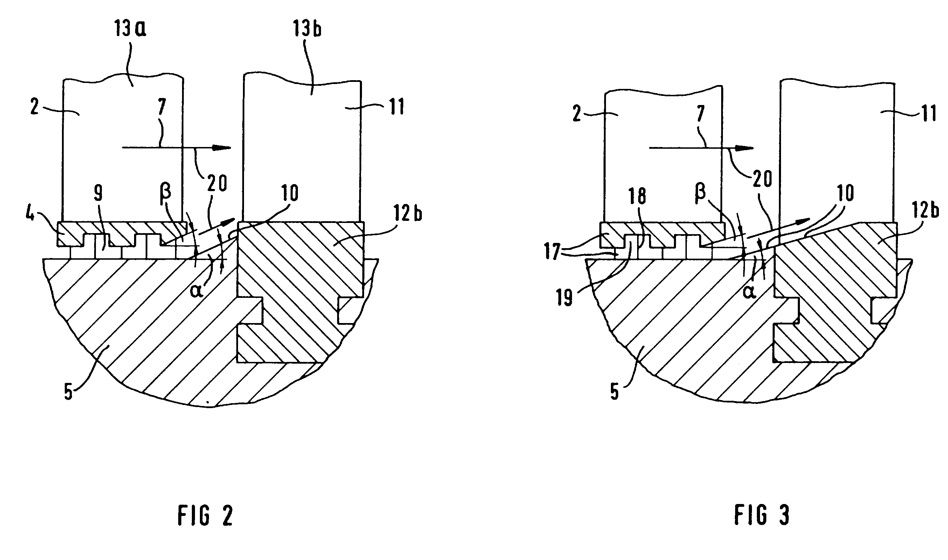

Hierzu ist gemäß Figur 1 und Figur 2 eine Begrenzungsfläche 10 stromab eines jeden Spaltes 9 vorgesehen, die von dem Spalt 9 zu einem jeweiligen Fußbereich 12a, 12b führt, und als ebene Fläche den spitzen Winkel α mit der Hauptströmungsrichtung 7 einschließt. Die Begrenzungsfläche 10 kann auch gekrümmt mit dem spitzen Winkel α im Mittel ausgeführt sein. Der spitze Winkel α liegt vorzugsweise im Bereich von 10°. Gemäß Figur 2 ist zusätzlich der Kopfbereich 4 der ersten Turbinenschaufel 2 abströmseitig um einen Winkel β, welcher im wesentlichen mit dem spitzen Winkel α übereinstimmt, abgeschrägt. Hierdurch erhält der Spaltmassenstrom bereits vor Austritt aus dem Spalt 9 eine Strömungskomponente für eine Einströmung in die durch den Hauptströmungsweg 6 strömende Hauptströmung, Hauptmassenstrom, des Aktionsfluides 20.

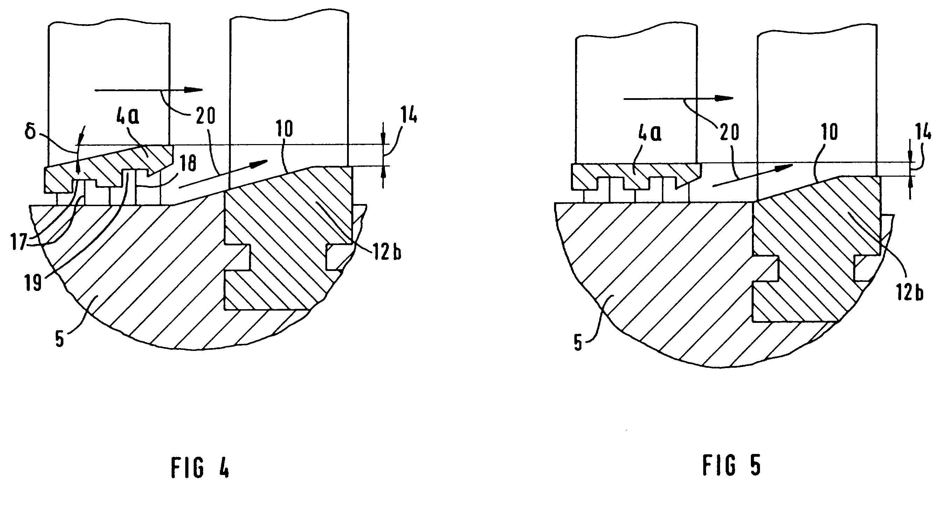

Gemäß der in Figur 3 dargestellten Ausführungsform erstreckt sich die Begrenzungsfläche 10 in den Fußbereich 12b der zweiten Turbinenschaufel 11 hinein, wodurch eine gegenüber Figur 2 flachere Einströmung des Spaltmassenstroms in den Hauptmassenstrom erreichbar ist. Gemäß der in Figur 4 dargestellten Ausführungsform erstreckt sich die Begrenzungsfläche 10 von der Turbinenkomponente 5 bis in den Fußbereich 12b hinein. Zwischen dem Schaufelfußbereich 12b und dem Kopfbereich 4a der Leitschaufel 2 besteht in radialer Richtung ein Höhenversatz 14, wodurch der Winkel α ebenfalls gering sein kann und dadurch eine im wesentlichen fast axiale Einströmung des Spaltmassenstroms in den Hauptmassenstrom des Aktionsfluids 20 erfolgt. Der Kopfbereich 4 ist einströmseitig mit einem Winkel δ abgeschrägt, der vorzugsweise dem spitzen Winkel α entspricht. Hierdurch ist eine Wiedereinströmung des Spaltmassenstroms aus einem Spalt 9 einer der ersten Turbinenschaufel 2 in axialer Richtung vorgeschalteten zweiten Turbinenstufe 11 in den Hauptmassenstrom mit geringem Strömungswiderstand möglich.

Gemäß der Ausführungsform nach Figur 5 besteht zwischen dem Kopfbereich 4a und dem Fußbereich 12b ebenfalls ein Höhenversatz 14, wobei die Begrenzungsfläche 10 sich allerdings lediglich über den Fußbereich 12b erstreckt.

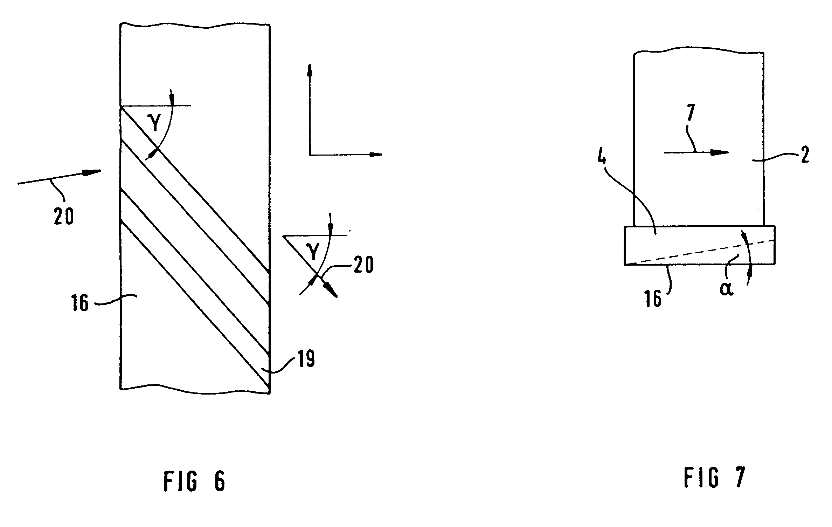

Figur 6 zeigt in einer abgewickelten Darstellung die Umfangsfläche 16 von zu einem Deckband zusammengefaßten Kopfbereichen 4 von in Umfangsrichtung zu einem Schaufelkranz zusammengefügter erster Turbinenschaufeln 2. Der Kopfbereich 4 weist voneinander beabstandete Vertiefungen 19 auf, von denen der Übersichtlichkeit halber lediglich zwei dargestellt sind, die in dem Spalt 9 eine Umlenkung des Spaltmassenstroms um einen Winkel γ gewährleisten. Die Vertiefungen 19 sind in Figur 6 als gerade Vertiefungen dargestellt, sie können allerdings selbstverständlich auch gekrümmt ausgeführt sein, insbesondere dem Schaufelprofil des Schaufelblattbereichs 13a angepaßt sein. Der Umlenkwinkel γ entspricht im wesentlichen dem Umlenkwinkel, den das Aktionsfluid 20 bei Durchströmen des Profilbereichs 13a erfährt. Die Strömungsrichtung des Aktionsfluides 20 stromab der Turbinenschaufel 2 sowie stromauf der Turbinenschaufel 2 ist mit einem jeweiligen Pfeil gekennzeichnet. Gemäß Figur 7 ist in dem Kopfbereich 4 jede Vertiefung 19 in Hauptströmungsrichtung 7 um den spitzen Winkel α geneigt. Die Vertiefungen 19 bewirken sowohl eine Anpassung des Spaltmassenstroms an den Hauptmassenstrom in axialer Richtung als auch in Umfangsrichtung.

Die Erfindung zeichnet sich durch eine Turbine, insbesondere eine Dampfturbine, aus, bei der eine Anpassung des Spaltmassenstroms sowohl in axialer Richtung über eine dem Spalt nachgeschaltete Begrenzungsfläche als auch in Umfangsrichtung über Vertiefungen in einem Deckband und/oder einer an den Spalt angrenzenden Turbinenkomponente erreicht ist. Hierdurch ist eine Verringerung eines Wirkungsgradverlustes infolge der Wiedereinströmung des Spaltmassenstroms in einen Hauptstrom des Aktionsfluides merklich verringert.

## Patentansprüche

1. Turbine, insbesondere Dampfturbine, welche entlang einer Rotationsachse (1) gerichtet ist, mit
a) einer ersten Turbinenschaufel (2), die entlang einer Schaufelachse (3a) gerichtet ist und einen Kopfbereich (4) sowie einen daran angrenzenden Schaufelblattbereich (13a) aufweist,
b) einer sich entlang der Rotationsachse (1) erstreckenden Turbinenkomponente (5),
c) einem Hauptströmungsweg (6) mit einer Hauptströmungsrichtung (7) und
d) einem Spaltströmungsweg (8) der strömungstechnisch mit dem Hauptströmungsweg (6) verbunden ist und durch einen Spalt (9) zwischen dem Kopfbereich (4) und der Turbinenkomponente (5) führt,
**dadurch gekennzeichnet,** daß der Spaltströmungsweg (8) in bezug auf die Hauptströmungsrichtung (7) gesehen stromab des Spaltes (9) eine Begrenzungsfläche (10) aufweist, die im Mittel mit einem spitzen Winkel (α) gegenüber der Rotationsachse (1) geneigt ist.

2. Turbine nach Anspruch 1,
**dadurch gekennzeichnet,** daß die Begrenzungsfläche (10) zumindest bereichsweise durch die Turbinenkomponente (5) gebildet ist.

3. Turbine nach Anspruch 1 oder 2,
**dadurch gekennzeichnet,** daß stromab der ersten Turbinenschaufel (2) eine zweite sich entlang einer Schaufelachse (3b) erstreckende Turbinenschaufel (11) vorgesehen ist, die einen Schaufelblattbereich (13b) und einen Fußbereich (12b) aufweist, und mit dem Fußbereich (12b) in der Turbinenkomponente (5) befestigt ist, wobei die Begrenzungsfläche (10) mindestens bereichsweise den Fußbereich (12b) von dem Schaufelblattbereich (13b) abgrenzt.

4. Turbine nach Anspruch 3,
**dadurch gekennzeichnet,** daß der Schaufelblattbereich (13a) gegenüber dem an den Fußbereich (12b) der zweiten Turbinenschaufel (11) angrenzenden Schaufelblattbereich (13b) einen radialen Höhenversatz (14) aufweist.

5. Turbine nach einem der vorhergehenden Ansprüche,
**dadurch gekennzeichnet,** daß der spitze Winkel (α) kleiner 45° ist, insbesondere zwischen 5° und 25°, vorzugsweise etwa 10°, beträgt.

6. Turbine nach einem der vorhergehenden Ansprüche,
**dadurch gekennzeichnet,** daß der Schaufelblattbereich (13a) zur Umlenkung eines durch den Hauptströmungsweg (6) führbaren Aktionsfluides (20) um einen Umfangswinkel (γ) in Umfangsrichtung gegenüber der Rotationsachse (1) geneigt ausgebildet ist, und die Turbinenkomponente (5) und/oder die erste Turbinenschaufel (2) eine den Spaltströmungsweg (8) begrenzende Umfangsfläche (16) aufweist, in welcher Umfangsfläche (16) zumindest eine Vertiefung (17) zur Strömungsumlenkung im wesentlichen ebenfalls um den Umfangswinkel (γ) geneigt vorgesehen ist.

7. Turbine nach Anspruch 6,
**dadurch gekennzeichnet,** daß die Vertiefung (17) im Mittel um den spitzen Winkel (α) in axialer Richtung geneigt ist.

8. Turbine, insbesondere Dampfturbine, welche entlang einer Rotationsachse (1) gerichtet ist, mit
a) einer ersten Turbinenschaufel (2), die entlang einer Schaufelachse (3a) gerichtet ist und einen Kopfbereich (4) sowie einen Schaufelblattbereich (13a) aufweist,
b) einer sich entlang der Rotationsachse (1) erstreckenden Turbinenkomponente (5),
c) einem Hauptströmungsweg (6) mit einer Hauptströmungsrichtung (7),
d) einem Spaltströmungsweg (8) der strömungstechnisch mit dem Hauptströmungsweg (6) verbunden ist und durch einen Spalt (9) zwischen Kopfbereich (4) und Turbinenkomponente (5) führt, wobei der Schaufelblattbereich (13a) zur Umlenkung eines durch den Hauptströmungsweg (6) führbaren Aktionsfluides (20) in Umfangsrichtung um einen Umfangswinkel (γ) ausgebildet ist,
**dadurch gekennzeichnet,** daß die Turbinenkomponente (5) und/oder die erste Turbinenschaufel (2) eine den Spaltströmungsweg (8) begrenzende Umfangsfläche (16) aufweisen bzw. aufweist, in welcher Umfangsfläche (16) zumindest eine Vertiefung (17) zur Strömungsumlenkung im wesentlichen ebenfalls um den Umfangswinkel (γ) vorgesehen ist.

9. Turbine nach Anspruch 8,
**dadurch gekennzeichnet,** daß die Vertiefung (17) im Mittel um einen spitzen Winkel (α) axial gegenüber der Rotationsachse (1) geneigt ist.

10. Turbine nach einem der vorhergehenden Ansprüche,
**dadurch gekennzeichnet,** daß in dem Spalt (9) ein Dichtsystem (17), insbesondere umfassend Dichtspitzen (18), vorgesehen ist.

11. Turbine nach Anspruch 10,
**dadurch gekennzeichnet,** daß der Kopfbereich (4) dem Spalt (9) zugewandt zumindest eine Dichtvertiefung (19) aufweist.

12. Turbine nach einem der vorhergehenden Ansprüche,
**dadurch gekennzeichnet,** daß der Kopfbereich (4) abströmseitig im Mittel um einen spitzen, den Spalt (9) erweiternden Winkel (β) gegenüber der Rotationsachse (1) geneigt ist.

13. Turbine nach einem der vorhergehenden Ansprüche,
**dadurch gekennzeichnet,** daß die erste Turbinenschaufel (2) einen Fußbereich (12a) mit einer um den spitzen Winkel (α) gegenüber der Rotationsachse (1) geneigten weiteren Begrenzungsfläche (15) aufweist.

14. Turbine nach einem der vorhergehenden Ansprüche,
**dadurch gekennzeichnet,** daß der Kopfbereich (5) zum Schaufelblattbereich (13a) gerichtet anströmseitig gegenüber der Rotationsachse (1) im Mittel um einen spitzen Anströmwinkel (δ) geneigt ist.

15. Turbine nach einem der vorhergehenden Ansprüche,
**dadurch gekennzeichnet,** daß die erste Turbinenschaufel (2) eine Leitschaufel und die Turbinenkomponente (5) eine Turbinenwelle oder die erste Turbinenschaufel (2) eine Laufschaufel und die Tubinenkomponente (5) ein Turbinengehäuse ist.

16. Turbinenschaufel (2), die entlang einer Schaufelachse (3a) gerichtet ist und einen Kopfbereich (4) sowie einen daran angrenzenden Schaufelblattbereich (13a) aufweist, wobei der Schaufelblattbereich (13a) zur Umlenkung eines Aktionsfluides (20) um einen Umfangswinkel (γ) ausgebildet ist,
**dadurch gekennzeichnet,** daß der Kopfbereich (4) eine Umfangsfläche (16) im wesentlichen senkrecht zur Schaufelachse (3a) aufweist, in welcher Umfangsfläche (16) zumindest eine Vertiefung (17) zur Strömungsumlenkung im wesentlichen ebenfalls um den Umfangswinkel (γ) vorgesehen ist.

17. Turbinenschaufel (2) nach Anspruch 16,
**dadurch gekennzeichnet,** daß die Vertiefung (17) im Mittel um einen spitzen Winkel (α) gegenüber einer zur Schaufelachse (3a) senkrechten Rotationsachse (1) geneigt ist.
